Europäisches Patentamt

European Patent Office

Office européen des brevets

(11) Veröffentlichungsnummer: **0 476 378 A1**

# EUROPÄISCHE PATENTANMELDUNG

(21) Anmeldenummer: **91114408.7**

(51) Int. Cl.5: **B23B 31/16**, B23B 31/39

(22) Anmeldetag: **28.08.91**

(30) Priorität: **19.09.90 DE 4029625**

(43) Veröffentlichungstag der Anmeldung:
**25.03.92 Patentblatt 92/13**

(84) Benannte Vertragsstaaten:
**FR GB IT SE**

(71) Anmelder: **SMW Schneider & Weisshaupt GmbH**
**Wiesentalstrasse 28**

W-7996 Meckenbeuren(DE)

(72) Erfinder: **Gulde, Siegfried**
**Dürrenwaldstetten 1**
**W-7945 Langenengslingen(DE)**

(74) Vertreter: **Engelhardt, Guido, Dipl.-Ing.**
**Patentanwalt Montafonstrasse 35 Postfach 1350**
**W-7990 Friedrichshafen 1(DE)**

(54) **Spanneinrichtung.**

(57) Bei einem Spannfutter (1) mit radial verstellbaren Grundbacken (4), in deren stirnseitige Verzahnung (6) auswechselbare Aufsatzbacken (11) eingreifen und die mit diesen mittels eines Nutensteines (15) kuppelbar sind, der durch ein Verstellglied (21) mindestens um die Höhe der ineinandergreifenden Verzahnungen (6, 12) verschiebbar ist, ist das Verstellglied (21) durch einen den Schaft (17) des Nutensteines durchgreifenden Spannbolzen (22) gebildet, der über eine kegelförmige Spannfläche (26) an einer verdrehbar gehaltenen Gewindespindel (31) abgestützt ist, derart, daß der Nutenstein (15) durch die bei Verdrehung der Gewindespindel (31) mit Gegenflächen (28, 33) zusammenwirkenden Spannflächen (24, 26) des Spannbolzens (22) in Achsrichtung seines Schaftes (17) verstellbar ist.

Durch diese Ausgestaltung ist es möglich, Aufsatzspannbacken (11) in sehr kurzer Zeit mit Grundbacken (4) zu koppeln oder diese Verbindung zu lösen, außerdem ist auch eine äußerst hohe Stabilität der Grundbacken-Aufsatzbacken-Einheit gegeben, so daß auch sehr hohe Kräfte übertragen werden können.

FIG. 1

Die Erfindung bezieht sich auf eine Spanneinrichtung, insbesondere ein Spannfutter für Drehmaschinen, einen Spannstock oder dgl. mit radial verstellbar beispielsweise in einem Futterkörper geführten Grundbacken, die einzeln oder gemeinsam mit einem Antriebsglied in Verbindung stehen und in deren stirnseitige Verzahnung auswechselbare Aufsatzbacken eingreifen, die mit den zugeordneten Grundbacken mittels eines in einer in deren Achsrichtung verlaufenden und mit einer Hinterha-kung versehenen Führungsnut eingreifenden Nu-tenstein kuppelbar sind, wobei der Nutenstein durch ein Verstellglied von außen um mindestens die Höhe der ineinandergreifenden Verzahnungen axial verschiebbar ist.

Durch die DE-OS 29 49 567 ist ein Spannfutter dieser Art bekannt. Zur Axialverschiebung des Nutensteins um die Höhe der ineinandergreifenden Backenverzahnungen dient hierbei ein Spannstück als Verstellglied, das in einer in dem Grundbacken vorgesehenen Freisparung eingesetzt und durch eine ortsfest angeordnete Verstellspindel radial verschiebbar ist. Über Schrägflächen werden die Verstellbewegungen des Spannstückes auf den Nutenstein übertragen. Abgesehen davon, daß diese Ausgestaltung baufaufwendig und somit teuer in der Herstellung ist, wird durch die zur Aufnahme des Spannstückes erforderliche sich in radialer Richtung erstreckende Ausnehmung des Grundbackens dieser geschwächt, eine hohe Stabilität ist demnach nicht gegeben. Der Einsatzbereich dieses Spannfutters ist daher begrenzt. Auch werden die Verstellbewegungen der Verstellspindel nicht unmittelbar auf den Nutenstein, sondern zunächst auf das Spannstück und erst von diesem über die Schrägflächen auf den Nutenstein übertragen, so daß ein Backenwechsel in kurzer Zeit nicht vorzunehmen und die Verstellspindel mehrfach zu drehen ist, um den Nutenstein um die Höhe der ineinandergreifenden Verzahnungen zu verschieben.

Aufgabe der Erfindung ist es daher, eine Spanneinrichtung der vorgenannten Gattung in der Weise auszubilden, daß ein Spannbackenwechsel in sehr kurzer Zeit und ohne Schwierigkeiten vorgenommen werden kann, und daß eine in sich starre und damit auch hochbelastbare Verbindung zwischen Grund- und Spannbacken gegeben ist, ohne daß deren Stabilität durch Ausnehmungen beeinträchtigt wird. Der dazu erforderliche Bauaufwand soll gering gehalten werden; so daß auch eine wirtschaftliche Fertigung und eine vielseitige Verwendbarkeit gegeben sind. Des weiteren sollen die Aufsatzbacken in einem großen radialen Bereich gegenüber den Grundbacken verstellbar sein.

Gemäß der Erfindung wird dies dadurch erreicht, daß das Verstellglied durch einen oder zwei den Schaft des Nutensteines radial oder senkrecht zur Längsachse der dessen Kopf aufnehmenden Führungsnut durchgreifenden oder in diesen teilweise eingreifenden Spannbolzen gebildet ist, der über eine oder zwei angeformte in dessen Achsrichtung geneigt verlaufende kegelförmige oder kugelige Spannflächen unmittelbar an dem Schaft des Nutensteines oder an einer in dem Grund-oder Spannbacken verdrehbar gehaltenen Gewindespindel abgestützt ist, und daß der Nutenstein durch die bei Verdrehung der Gewindespindel mit Gegenflächen zusammenwirkenden Spannflächen des Spannbolzens in Achsrichtung seines Schaftes verstellbar ist.

Zweckmäßig ist es hierbei, wenn der Spannbolzen jeweils in einer in den Schaft des Nutensteines eingearbeiteten Bohrung eingesetzt ist, mit seinem radial inneren Ende in eine in den Grund- oder den Spannbacken eingearbeitete Ausnehmung mit ke-gelig oder kugelförmig ausgebildeter Gegenfläche eingreift und mit seinem radial äußeren Ende über die kegelig oder kugelförmig gestalteten Spannflächen an der Gegenfläche der Gewindespindel abgestützt ist.

Bei einem in einer zylindrischen Bohrung des Schaftes des Nutensteines eingesetzten Spannbolzen ist es angebracht, die dessen radial inneres Ende aufnehmende Ausnehmung des Grund- oder Spannbackens sowie die Ausnehmung der Gewindespindel koaxial zueinander anzuordnen.

Nach einer andersartigen Ausführungsform kann die das radial innere Ende des Spannbolzens aufnehmende Ausnehmung aber auch in Richtung des Kopfes des Nutensteines gegenüber der Ausnehmung der Gewindespindel versetzt angeordnet sein, wobei die den Spannbolzen aufnehmende in den Schaft des Nutensteines eingearbeitete Bohrung und/oder der Spannbolzen in deren Bereich ballig ausgebildet sein sollte.

Angebracht ist es ferner, die das innere Ende und/oder das äußere Ende des Spannbolzens aufnehmende Ausnehmungen jeweils in ein in den Grund- oder Spannbacken bzw. an einem in die Gewindespindel eingesetztes zylindrisches Einsatzstück einzuarbeiten.

Nach weiteren Ausführungsvarianten kann der Spannbolzen in dem in den Schaft des Nutensteines eingreifenden Bereich ganz oder teilweise als kegelige Spannfläche, die mit einer an dem Schaft angearbeiteten Gegenfläche zusammenwirkt, ausgebildet sein, und die Gewindespindel kann in Form eines Gewindeansatzes oder einer Mutter fest mit dem Spannbolzen verbunden sein, und zwar auch in der Weise, daß der Nutenstein mittels zweier einander gegenüberliegend auf einer Achse angeordneter in dem Grund- oder Spannbacken mittels einer angeformten Mutter als Gewindespindel einschraubbarer Spannbolzen verstellbar ist.

Ferner kann der Spannbolzen mit einem über dessen Spannfläche axial überstehenden Gewindeansatz in einem drehfest in dem Grund- oder Spannbacken gehaltenen Gegenstück eingesetzt sein, das eine entgegengesetzt zu der Spannfläche des Spannbolzens geneigte mit einer in den Schaft des Nutensteines eingearbeiteten Gegenfläche zusammenwirkenden Spannfläche aufweist.

Wird eine Spanneinrichtung gemäß der Erfindung ausgebildet, so ist es nicht nur möglich, die Aufsatzbacken beispielsweise bei einem Spannfutter für Drehmaschinen in sehr kurzer Zeit mit den Grundbacken zu koppeln oder diese Verbindung zu lösen, sondern es ist auch eine äußerst hohe Stabilität der Grundbacken-Aufsatzbacken-Einheit gegeben,so daß sehr hohe Spannkräfte ohne Schwierigkeiten übertragen werden können. Wird nämlich als Verstellglied ein Spannbolzen vorgesehen, der bei einer Axialverschiebung über Spannflächen auf den Nutenstein einwirkt, so werden die Grund- und Aufsatzbacken nicht unnötigerweise geschwächt, vielmehr werden diese durch den Nutenstein stets sicher arretiert und die auftretenden Kräfte werden auf großen Flächen abgestützt, so daß eine in sich starre Verbindung gegeben ist.

Des weiteren ist von Vorteil, da der Nutenstein durch den Spannbolzen unmittelbar betätigt wird, daß die Verbindung zwischen den Aufsatzbacken und den Grundbacken auch in kurzer Zeit zu lösen oder herzustellen ist und daß der Verstellweg der Verstellspindel klein gehalten werden kann, aber dennoch eine ausreichende Verschiebung des Nutensteines zu bewerkstelligen ist. Auch können die Aufsatzbacken, zumal in diese keine Befestigungsschrauben eingesetzt sind, nahezu völlig ausgenutzt und somit ausgedreht werden und die einzelnen Bauteile sind auf einfache und wirtschaftliche Weise herzustellen.

In der Zeichnung sind einige Ausführungsbeispiele einer erfindungsgemäßen, als Spannfutter für Drehmaschinen ausgebildeten Spanneinrichtung dargestellt, die nachfolgend im einzelnen erläutert sind. Hierbei zeigt:

Figur 1     das mit auswechselbaren Aufsatzbacken versehene Spannfutter in einem Axialschnitt,

Figur 2     eine Draufsicht auf eine Grundbacken-Aufsatzbacken-Einheit des Spannfutters nach Figur 1,

Figur 3     eine andersartige Ausgestaltung des Spannbolzens bei dem Spannfutter nach Figur 1,

Figur 4     einen in einen Aufsatzbacken eingesetzten einstückig ausgebildeten Spannbolzen zur Verstellung des Nutensteines bei der Grundbacken-Aufsatzbacken-Einheit des Spannfutters nach Figur 1,

Figur 5     zwei einander gegenüberliegend angeordnete einstückige Spannbolzen in einer Darstellung gemäß Figur 4 und

Figur 6     einen mit einem Gegenkonus versehenen und in den Grundbacken eingeschraubten Spannbolzen bei der Grundbacken-Aufsatzbacken-Einheit des Spannfutters nach Figur 1.

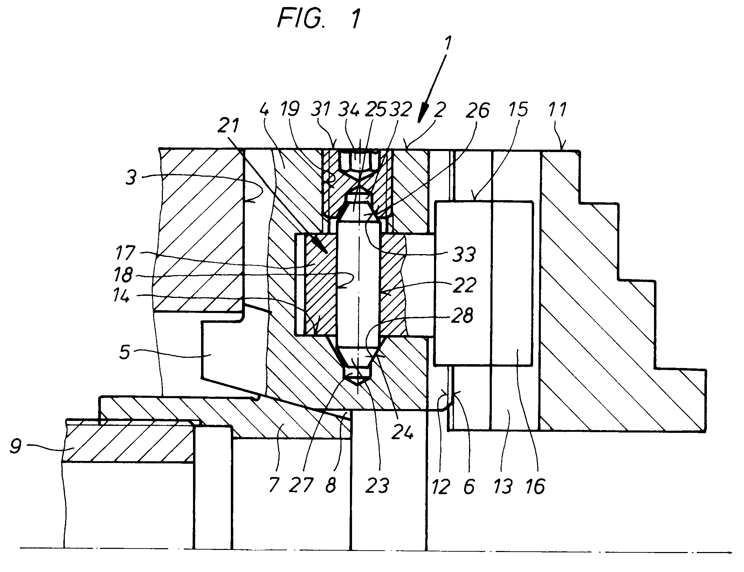

Das in Figur 1 dargestellte und mit 1 bezeichnete Spannfutter besteht im wesentlichen aus einem Futterkörper 2, in diesen in radial gerichteten Nuten 3 verschiebbar eingesetzten Grundbacken 4, die mit angeformten Keilhaken 5 versehen sind, sowie Aufsatzbacken 11, die auswechselbar mit den Grundbacken 4 gekoppelt sind. Zur Verstellung der Grundbacken 4 dient ein ebenfalls mit Keilhaken 8 ausgestatteter Verstellkolben 7, der über eine in diesen eingeschraubten axial verstellbaren Zugstange 9 von einer mit dieser verbundenen nicht gezeigten Servoeinrichtung verstellbar ist. Bei einer Axialverschiebung des Verstellgliedes 7 werden somit die Grundbacken 4, deren Keilhaken 5 mit den Keilhaken 8 des Verstellkolbens 7 zusammenwirken und wobei durch diese die Axialbewegung in eine Radialbewegung umgelenkt wird, radial nach innen oder außen verschoben.

Zur Koppelung der Aufsatzbacken 11, die mit einer Stirnverzahnung 12 in eine in den Grundbacken 4 eingearbeitete Verzahnung 6 eingreifen, mit den Grundbacken 4 ist ein Nutenstein 15 vorgesehen, der mit seinem Schaft 17 in einer Ausnehmung 14 des Grundbackens 4 eingesetzt und dessen Kopf 16 in einer mit Hinterschneidungen versehenen T-förmig gestalteten Führungsnut 13 des Aufsatzbackens 11 verschiebbar gehalten ist. Und zur Verspannung des Kopfes 16 des Nutensteins 15 in der Führungsnut 13 ist als Spannelement 21 ein Spannbolzen 22 vorgesehen, der eine in den Schaft 17 eingearbeitete Bohrung 18 durchgreift und an seinem radial inneren Ende 23 eine kegelig ausgebildete Spannfläche 24 und an seinem radial äußeren Ende 25 eine ebenfalls kegelig ausgebildete Spannfläche 26 aufweist. Mit den Spannflächen 24 und 26 des Spannbolzens 22 zusammenwirkende Gegenflächen 28 bzw. 33 sind durch Einarbeiten einer Ausnehmung 27 in den Grundbacken 4 bzw. einer Ausnehmung 32 in eine Gewindespindel 31 gebildet, die in einer in den Grundbacken 4 vorgesehenen Gewindebohrung 19 eingeschraubt sind. Die Ausnehmungen 28 und 32 sind hierbei koaxial zueinander angeordnet.

Der Nutenstein 15 ist mittels des Spannbolzens 22 in seiner Längsrichtung mindestens um die Höhe der ineinandergreifenden Verzahnungen 5 und 12 der Grundbacken 4 und der Spannbacken 11 verstellbar. Dies wird durch einen entsprechenden Freiraum zwischen den Spannflächen 23 und 25 des Spannbolzens 22 sowie den mit diesen zusammenwirkenden Gegenflächen 24 und 26 in den Ausnehmungen 28 und 32 ermöglicht. Bei einem Wechsel eines Aufsatzbackens 11 ist somit die Gewindespindel 31 so weit nach außen zu verdrehen, daß der Spannbolzen 22 um die Höhe der Verzahnungen 6, 12 nach links ausweichen und der Aufsatzbacken 11 radial verstellt oder von dem Kopf 16 des Nutensteines 17 abgenommen werden kann.

Wird jedoch die Gewindespindel 31 mittels eines in derer Schlüsselöffnung 34 einsetzbaren Werkzeuges nach innen verstellt, so wird durch die auf die Spannfläche 25 des Spannbolzens 22 einwirkende Gegenfläche 33 der Gewindespindel 31 dieser nach innen geschoben und dabei auch durch die an den Grundbacken 4 angeformte Gegenfläche 28 nach rechts bewegt. Der Nutenstein 15 wird bei dieses Verstellbewegung des Spannbolzens 22, da dieser an diese anliegt, nach rechts mitgenommen und somit in Richtung seines Schaftes 17 verstellt, so daß der Kopf 16 in der Führungsnut 13 gegen den Aufsatzbacken 11 gepreßt wird. Auf diese Weise ist der Aufsatzbacken 11 fest mit dem Grundbacken 4 gekoppelt.

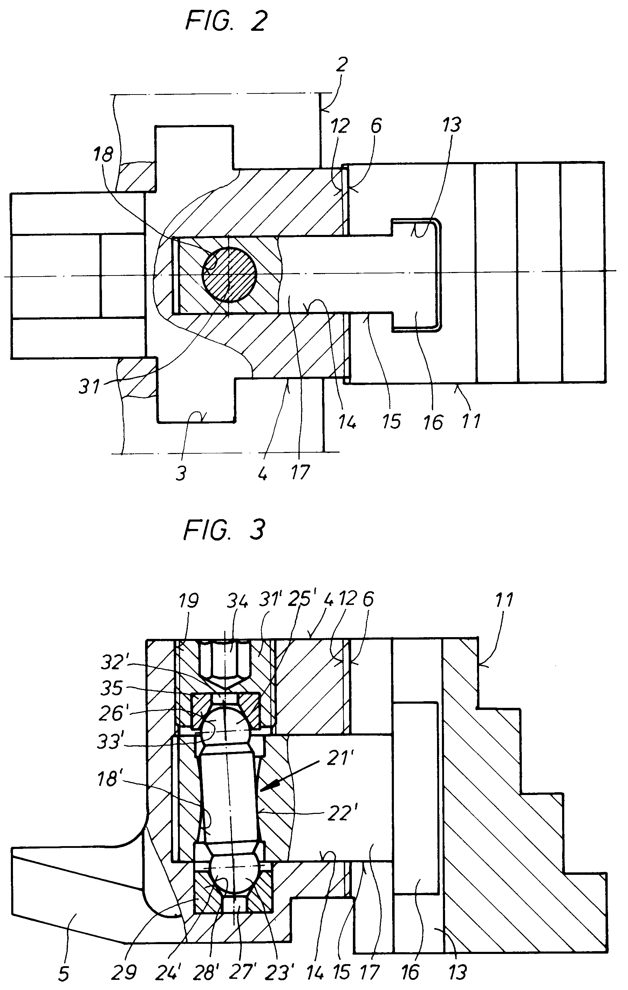

Bei dem Ausführungsbeispiel nach Figur 3 sind an dem inneren Ende 23' und dem äußeren Ende 25' des wiederum als Spannbolzen 22' ausgebildeten Verstellelementes 21' kugelförmige Spannflächen 24' bzw. 26' angearbeitet. Die mit diesen zusammenwirkenden Gegenflächen 28' bzw. 33' sind jedoch kegelig gestaltet und hierbei in Einsatzstücke 29 bzw. 35 eingearbeitet, die in den Grundbacken 4 bzw. die Gewindespindel 31' eingesetzt sind. Die Ausnehmungen 27' und 32', durch die die Gegenflächen 28' und 33' gebildet sind, sind hierbei jedoch in Achsrichtung des Spannfutters gegeneinander versetzt, und zwar ist die Ausnehmung 28' in Richtung des Kopfes 16 des Nutensteines 15 gegenüber der Ausnehmung 33' vorgesetzt angeordnet, und die in den Schaft 17 eingearbeitete Bohrung 18' ist ballig ausgebildet, so daß der Spannbolzen 22' bei einer Verstellung der Gewindespindel 31' eine Schwer bewegung ausführt. Dadurch wird der Nutenstein 15 nach links gezogen und der Kopf 16 in der Führungsnut 13 des Aufsatzbackens 11 verspannt.

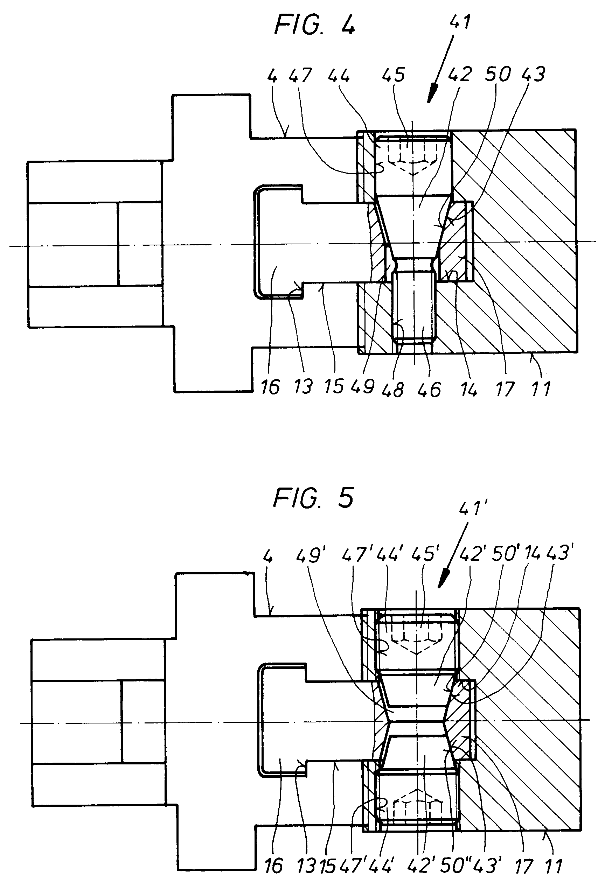

Gemäß Figur 4 ist als Verstellglied 41 ein einstöckig ausgebildeter Spannbolzen 42 vorgesehen, an dem eine kegelige Spannfläche 43 angearbeitet und der mittels einer angeformten Gewindespindel in Form eines Gewindeansatzes 46 in eine Gewindebohrung 48 des Aufsatzbackens 11 eingeschraubt ist. Der Spannbolzen 42, der außerdem mit einem in einer Bohrung 47 des Aufsatzbackens 11 verdrehbar gelagerten Bund 44 und eine in diesen eingearbeitete Schlüsselöffnung 45 versehen ist, durchgreift hierbei den Ausfsatzbacken 11 sowie den Schaft 17 des Nutensteines 15 senkrecht zur Längsachse der in den Grundbacken 4 eingearbeiteten Führungsnut 13, in der der Kopf 16 des Nutensteines 15 verschiebbar ist.

Die Spannfläche 43 des Spannbolzens 42 wirkt mit einer Gegenfläche 50 zusammen, die durch eine in den Schaft 17 des Nutensteines 15 eingearbeitete Ausnehmung 49 geschaffen ist. Durch Verschrauben des Spannbolzens 42 wird somit der Nutenstein 15 nach rechts gedrückt, so daß der Grundbacken 4 fest mit dem Spannbacken 11 gekoppelt ist.

Bei der Ausgestaltung nach Figur 5, die prinzipiell dem Ausführungsbeispiel nach Figur 4 entspricht, sind als Verstellglied 41' zwei Spannbolzen 42' vorgesehen, die kegelig ausgebildete Spannflächen 43' aufweisen. Die Spannflächen 43' wirken mit gegeneinander geneigten Gegenflächen 50' und 50'' zusammen, die durch eine in den Schaft 17 des Nutensteines 15 eingearbeitete Ausnehmung 49' gebildet sind. Als Gewindespindel dient ein mit einer Schlüsselöffnung 45' ausgestatteter Bund 44' des Spannbolzens 42', der in eine Gewindebohrung 47' des Aufsatzbackens 11 eingeschraubt ist.

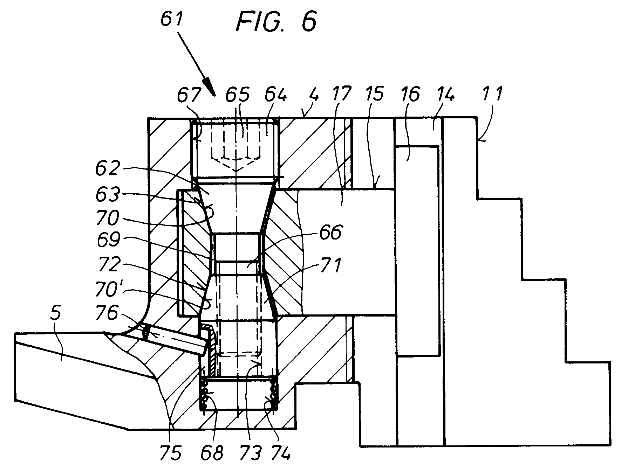

Das Spannelement 61 wird bei der Ausführungsvariante nach Figur 6 durch einen mit einer Spannfläche 63 ausgestatteten Spannbolzen 62 und einem Gegenkonus 71 gebildet, der verdrehfest in einer in den Grundbacken 4 eingearbeiteten Ausnehmung 68 gehalten und durch eine Feder 74 abgestützt ist sowie ebenfalls eine Spannfläche 72 aufweist. Der mit einem Innengewinde 73 versehene Gegenkonus 71 ist auf einem Gewindeansatz 66 des Spannbolzens 63 aufgeschraubt und wird durch einen in einen Schlitz 75 eingreifenden Stift 76 gesichert.

Als Gewindespindel dient ein an dem Spannbolzen 62 angeformter mit einer Schlüsselöffnung 65 sowie einem Außengewinde versehener Bund 64, der in einer Gewindebohrung 67 des Grundbackens 4 eingeschraubt ist. Die mit den Spannflächen 63 und 72 zusammenwirkenden Gegenflächen 70 und 70' sind wiederum durch eine in den Schaft 17 des Nutensteines 15 eingearbeitete Ausnehmung 69 geschaffen und gegeneinander geneigt. Durch Verdrehen des Spannbolzens 62 wird somit nicht nur dessen Spannfläche 63 in Richtung des Schaftes 16 verstellt, sondern auch der auf dem Gewindeansatz 66 aufgeschraubte Gegenkonus 71, so daß beim Verspannen des Nutensteines 15 keine Kippmomente auftreten.

**Patentansprüche**

1.  Spanneinrichtung, insbesonder Spannfutter für Drehmaschinen, Spannstock oder dgl. mit radial verstellbar beispielsweise in einem Futterkörper geführten Grundbacken, die einzeln oder gemeinsam mit einem Antriebsglied in Verbindung stehen und in deren stirnseitige Verzahnung auswechselbare Aufsatzbacken eingreifen, die mit den zugeordneten Grundbacken mittels eines in einer in deren Achsrichtung verlaufenden und mit einer Hinterhakung versehenen Führungsnut eingreifenden Nutenstein kuppelbar sind, wobei der Nutenstein durch ein Verstellglied von außen um mindestens die Höhe der ineinandergreifenden Verzahnungen axial verschiebbar ist,

**dadurch gekennzeichnet**,

daß das Verstellglied (21, 21'; 41, 41'; 61) durch einen oder zwei den Schaft (17) des Nutensteines (15) radial oder senkrecht zur Längsachse der dessen Kopf (16) aufnehmenden Führungsnut (14) durchgreifenden oder in diesen teilweise eingreifenden Spannbolzen (22, 22'; 42, 42'; 62) gebildet ist, der über eine oder zwei angeformte in dessen Achsrichtung geneigt verlaufende kegelförmige oder kugelige Spannflächen (24, 26, 24', 26'; 43; 63) unmittelbar an dem Schaft (17) des Nutensteines (15) oder an einer in dem Grund- oder Spannbacken (4; 11) verdrehbar gehaltenen Gewindespindel (31, 31') abgestützt ist, und daß der Nutenstein (15) durch die bei Verdrehung der Gewindespindel (31, 31'; 46; 44'; 64) mit Gegenflächen (28; 33; 28'; 33'; 50, 50', 50''; 70, 70') zusammenwirkenden Spannflächen (24, 26, 24', 26'; 43; 63) des Spannbolzens (22, 22'; 42, 42'; 62) in Achsrichtung seines Schaftes (17) verstellbar ist.

2. Spanneinrichtung nach Anspruch 1,

**dadurch gekennzeichnet**,

daß der Spannbolzen (22) in einer in den Schaftes (17) des Nutensteines (15) eingearbeiteten Bohrung (18) eingesetzt ist, mit seinem radial inneren Ende (23) in eine den Grundbacken (4) oder den Spannbacken eingearbeitete Ausnehmung (27) mit kegelig oder kugelförmig ausgebildeten Gegenflächen (28) eingreift und mit seinem radial äußeren Ende (25) über die kegelig oder kugelförmig gestalteten Spannflächen (26) an der Gegenfläche (33) der Gewindespindel (31) abgestützt ist.

3. Spanneinrichtung nach Anspruch 2,

**dadurch gekennzeichnet,**

daß bei einem in einer zylindrischen Bohrung (18) des Schaftes (17) des Nutensteines (15) eingesetzten Spannbolzen (22) die dessen radial inneres Ende (23) aufnehmende Ausnehmung (27) des Grundbackens (4) oder des Spannbackens sowie die Ausnehmung (32) der Gewindespindel (31) koaxial zueinander angeordnet sind.

4. Spanneinrichtung nach Anspruch 2,

**dadurch gekennzeichnet**,

daß die das radial innere Ende (23') des Spannbolzens (22') aufnehmende Ausnehmung (27') in Richtung dem Kopfes (16) des Nutensteines (15) gegenüber der Ausnehmung (32') der Gewindespindel (31) versetzt angeordnet ist, und daß die den Spannbolzen (22') aufnehmende in den Schaft (17) des Nutensteines (15) eingearbeitete Bohrung (18') und/oder der Spannbolzen (22') in deren Bereich ballig ausgebildet sind (Fig.3).

5. Spanneinrichtung nach einem oder mehreren der Ansprüche 2 bis 4,

**dadurch gekennzeichnet,**

daß die das innere Ende (23') und/oder das äußere Ende (25') des Spannbolzens (22') aufnehmende Ausnehmungen (27'; 32') jeweils in ein in den Grund- oder Spannbacken (4) bzw. in die Gewindespindel (31') eingesetztes zylindrisches Einsatzstück (29; 35) eingearbeitet sind (Figur 3).

6. Spanneinrichtung nach Anspruch 1,

**dadurch gekennzeichnet**,

daß der Spannbolzen (42) in dem in den Schaft (17) des Nutensteines (14) eingreifenden Bereich ganz oder teilweise als kegelige Spannfläche (43), die mit einer an dem Schaft (17) angearbeiteten Gegenfläche (50) zusammenwirkt, ausgebildet ist, und daß die Gewindespindel in Form eines Gewindeansatzes (46) fest mit dem Spannbolzen (42) verbunden ist (Figur 4).

7. Spanneinrichtung nach Anspruch 6,

**dadurch gekennzeichnet**,

daß der Nutenstein (15) mittels zweier einander gegenüberliegend auf einer Achse angeordneter in dem Grund- oder Spannbacken (11) mittels eines angeformten einschraubbaren Spannbolzens (42') verstellbar ist (Figur 5).

8.  Spanneinrichtung nach Anspruch 6,

    **dadurch gekennzeichnet**,

    daß der Spannbolzen (62) mit einem über dessen Spannfläche (63) axial überstehenden Gewindeansatz (64) in einem drehfest in dem Grund- oder Spannbacken (4) gehaltenen Gegenstück (Gegenkonus 71) eingesetzt ist, das eine entgegengesetzt zu der Spannfläche (63) des Spannbolzens (62) geneigte mit einer in den Schaft (17) des Nutensteines (15) eingearbeiteten Gegenfläche (70') zusammenwirkenden Spannfläche (72) aufweist (Figur 6).

FIG. 1

FIG. 2

FIG. 3

*FIG. 4*

4 47 44 45 41 42 50 43

16 13 15 49 48 46 14 17 11

*FIG. 5*

4 49' 47' 44' 45' 41' 42' 50' 14 43'

16 13 15 47' 44' 42' 50" 43' 17 11

FIG. 6

| EINSCHLÄGIGE DOKUMENTE | | | EP 91114408.7 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
| A | US - A - 3 744 808 (HUGHES) * Fig. 1-11 * -- | 1,2,3, 6 | B 23 B 31/16 B 23 B 31/39 |
| A | DE - C1 - 3 528 943 (PAUL FORKARDT GMBH & CO KG) * Fig. 1-6 * -- | 1,2,3, 7,8 | |
| A | EP - A1 - 0 005 459 (RÖHM) * Fig. 1,2 * -- | 1,2,3, 6 | |
| A | EP - A1 - 0 318 360 (GAMET PRECISION) * Fig. 1-8 * -- | 1,2,3 | |
| A | DE - B2 - 2 711 904 (RÖHM) * Fig. 1 * -- | 1,2,3 | |
| D,A | DE - A1 - 2 949 566 (SMW SCHNEIDER & WEIßHAUPT GMBH) * Fig. 1,2 * ---- | 1 | RECHERCHIERTE SACHGEBIETE (Int. Cl.⁵) B 23 B 31/00 |

Der vorliegende Recherchenbericht wurde für alle Patentansprüche erstellt.

| Recherchenort | Abschlußdatum der Recherche | Prüfer |
|---|---|---|
| WIEN | 16-10-1991 | BRÄUER |